# EUROPÄISCHE PATENTANMELDUNG

(11) **EP 2 957 827 A1**
(43) Veröffentlichungstag der Anmeldung: **23.12.2015**
(21) Anmeldenummer: 14172887.3
(22) Anmeldetag: 18.06.2014
(51) Int. Cl.: F21V 8/00

(54) **Optikelement, insbesondere für eine Straßenleuchte, und Straßenleuchte mit einem Optikelement**

(71) Anmelder: Hella KGaA Hueck & Co., 59552 Lippstadt (DE)
(72) Erfinder: Möller, Dennis, 59557 Lippstadt (DE)

(57) **Zusammenfassung**

Optikelement, insbesondere für eine Straßenleuchte mit mindestens einer Leuchtdiode (8) als Lichtquelle, umfassend einen jedenfalls abschnittsweise im Wesentlichen flach erstreckten Lichtleiter (1) mit einer ersten Flachseite (2) und mit einer der ersten Flachseite (2) gegenüberliegenden und zu der ersten Flachseite (2) beabstandeten zweiten Flachseite (3) und mit mindestens einer die beabstandeten Flachseiten (2, 3) verbindenden Schmalseite (4, 5) vorgesehen ist, wobei ein erster Bereich des Lichtleiters (1) als ein Lichteinkoppelbereich (18) ausgebildet ist mit wenigstens einem Lichteinkoppelelement (6) zum Einkoppeln von Licht in den Lichtleiter (1), wobei ein zweiter Bereich des Lichtleiters (1) als ein Lichtauskoppelbereich (20) ausgebildet ist derart, dass die erste Flachseite (2) Lichtauskoppelemente (11) vorsieht zum Umlenken des über das wenigstens eine Lichteinkoppelelement (6) in den Lichtleiter (1) eingekoppelten Lichts in Richtung der als Lichtaustrittsfläche (3) dienenden zweiten Flachseite (3) des Lichtleiters (1), und wobei zwischen dem Lichteinkoppelbereich (18) und dem Lichtauskoppelbereich (20) ein Lichtleitbereich (19) vorgesehen ist, welcher derart ausgebildet ist, dass das in den Lichtleiter (1) eingekoppelte Licht vor dem Austritt aus dem Lichtleiter (1) totalreflektiert wird.

## Beschreibung

Die Erfindung betrifft ein Optikelement, insbesondere für eine Straßenleuchte mit wenigstens einer Leuchtdiode als Lichtquelle, sowie eine Straßenleuchte mit dem Optikelement.

Dekorative Straßenleuchten, insbesondere sogenannte Pilzleuchten, Oberlichtlaternen beziehungsweise Pollerleuchten, sind über lange Jahre mit konventioneller Beleuchtungstechnik realisiert worden. Als Lichtquelle kommen hierbei vorwiegend Halogen- beziehungsweise Gasentladungslampen zum Einsatz. Die Lampen sind üblicherweise im Inneren des Leuchtenkörpers vertikal installiert und weisen eine zylindrische beziehungsweise ellipsoide Grundform auf. Die Leuchten umfassen zusätzlich Optikelemente wie reflektierende Blechlamellen beziehungsweise diffuse Lichtscheiben, um das von den Lampen typischerweise zur Seite abgestrahlte Licht zu formen und die gewünschte Lichtverteilung zu erreichen.

In zunehmender Weise werden derartige Straßenleuchten heute mit Leuchtdioden als Lichtquellen realisiert. Hierdurch gelingt es, insbesondere den Energieverbrauch der Straßenleuchte zu reduzieren und die Lebensdauer der Lichtquellen zu erhöhen. Jedoch bedarf es zur Bereitstellung der geforderten Lichtverteilung vieler kleiner Lichtquellen, welche ihr Licht einseitig in einen Halbraum abstrahlen. Die homogene Ausleuchtung einer großen und insbesondere vertikal erstreckten Fläche stellt insofern eine technische Herausforderung dar, welche beispielsweise gelöst wird, indem eine Mehrzahl von mit Leuchtdioden bestückten Platinen in Vier-, Sechs- oder Achteckform so angeordnet werden, dass das Licht der Leuchtdioden seitlich abgestrahlt wird in einen großen horizontalen Winkelbereich. Exemplarisch beschreibt die EP 2 273 185 A1 ein derartiges System. Um die gewünschte Lichtverteilung in der geforderten Homogenität zu erhalten und der Straßenleuchte zugleich ein ansprechendes Design zu geben, wird ein mehrstufiges Optiksystem vorgesehen. Das mehrstufige Optiksystem verwendet regelmäßig Reflektoren mit nach- beziehungsweise vorgeschalteten Streuscheiben. Jeweils muss für eine einzige Lichtquelle oder eine Gruppe weniger Lichtquellen eine separate Optik vorgesehen werden. Dies ist insbesondere bei der großflächigen Anordnung vieler Lichtquellen aufwendig und entsprechend kostenintensiv. Zugleich reduziert sich der optische Wirkungsgrad der Straßenleuchte mit jeder Optikstufe.

Aus der nachveröffentlichten europäischen Patentanmeldung 14 156 324.7 der Anmelderin ist ein Optikelement für Straßenleuchten bekannt, welches einen Lichtleiter mit zwei Flachseiten vorsieht. Eine erste Flachseite des Lichtleiters sieht hierbei insbesondere prismenförmige Lichtauskoppelelemente vor zum Umlenken des in den Lichtleiter eingekoppelten Lichts in Richtung einer zweiten Flachseite, über die das Licht dann ausgekoppelt wird. Ferner sieht der Lichtleiter eine Mehrzahl von Lichteinkoppelelementen vor, über die das Licht von einer Mehrzahl von Leuchtdioden in dem Lichtleiter eingekoppelt wird. Die Lichteinkoppelemente sind relativ zu der ersten Flachseite des Lichtleiters so positioniert, dass wenigstens ein Teil des in den Lichtleiter eingekoppelten Lichts ohne weitere Umlenkung unmittelbar auf die Lichtauskoppelelemente trifft und von dort zur Abstrahlung des Lichts in Richtung der Lichtaustrittsfläche umgelenkt wird. Vorteilhaft ist hierbei, dass infolge der direkten Lichtumlenkung der optische Wirkungsgrad des Lichtleiters besonders günstig ist, und dass die Lichtverteilung sehr exakt beziehungsweise fein eingestellt werden kann. Das Optikelement ist hierbei Teil eines Lichtmoduls, welches als Ganzes in eine Straßenleuchte eingesetzt wird. Insbesondere sind die als Lichtquellen dienenden Leuchtdioden innerhalb des Lichtmoduls verbaut und somit positionsgenau in Bezug zu dem Lichtleiter festgelegt. Sofern ein Optikelement nachträglich in eine Straßenleuchte eingebaut werden soll, beispielsweise im Rahmen einer Umrüstung einer bestehenden Straßenleuchte auf eine LED-basierte Lichttechnik, bestehen jedoch geometrische Zwangsbedingungen, welche das Einsetzen eines bestehenden Lichtmoduls als Ganzes behindern können beziehungsweise Einfluss auf die Gestalt und Position des Optikelements innerhalb der Straßenleuchte nehmen. Zudem werden beim Nachrüsten eines Optikelements häufig die Leuchtdioden getrennt vom Optikelement verbaut und positioniert. Insofern bedarf es auch hier einer geometrischen Anpassung in Bezug auf die Position der Leuchtdioden einerseits und des Optikelements andererseits.

Aufgabe der vorliegenden Erfindung ist es insofern, ein Optikelement für eine Dekorstraßenleuchte bereitzustellen, welches kostengünstig ist und einen hohen optischen Wirkungsgrad aufweist. Darüber hinaus gilt es, eine Möglichkeit zur Schaffung einer Positionstoleranz vorzusehen, welche die Verwendung des Optikelements in verschiedenen Straßenleuchten erlaubt beziehungsweise die Anpassung des Optikelements an die jeweilige konstruktive Montagegegebenheit in einer speziellen Dekorstraßenleuchte begünstigt. Aufgabe der vorliegenden Erfindung ist es weiter, eine das Optikelement aufweisende Straßenleuchte mit einer Mehrzahl von Leuchtdioden als Lichtquellen anzugeben.

Zur Lösung der Aufgabe weist die Erfindung die Merkmale des Patentanspruchs 1 auf.

Der besondere Vorteil der Erfindung besteht darin, dass sich durch das Vorsehen des Lichtleitbereichs zwischen dem Lichteinkoppelbereich und dem Lichtauskoppelbereich eine große geometrische Freiheit bei der Gestaltung des Optikelements ergibt. Der Lichtleitbereich dient insofern als ein Ausgleichs- beziehungsweise Varianzbereich. Insbesondere durch die individuelle Gestaltung des Optikelements in dem Lichtleitbereich kann das Optikelement unterschiedlichen geometrischen Zwangsbedingungen angepasst werden. Die Integration des Optikelements in verschiedene Straßenleuchten vereinfacht sich hierdurch. Zudem bietet der Lichtleitbereich die Möglichkeit, dem Optikelement ein individuelles, beispielsweise ästhetisch ansprechendes Erscheinungsbild zu geben. Er entkoppelt insofern die primär unter lichttechnischen Gesichtspunkten gestalteten Lichteinkoppelelemente beziehungsweise den Lichteinkoppelbereich von dem ebenfalls unter primär funktionalen Gesichtspunkten zu gestaltenden Lichtauskoppelementen beziehungsweise den Lichtauskoppelbereich. Die optische Güte beziehungsweise der optische Wirkungsgrad des Lichtelements ist hierbei unverändert günstig, da der Verlust infolge einer Totalreflexion des Lichts im Lichtleitbereich äußerst gering ist. Abhängig vom eingesetzten Material kann der Wirkungsgrad des Optikelements aufgrund der im Wesentlichen verlustfreie Führung des Lichts in dem Lichtleiter mittels Totalreflexion zwischen 80 % und 90 % betragen. Als Material für das Optikelement kommt beispielsweise PC beziehungsweise PMMA zur Anwendung.

Kern der Erfindung ist es insofern, das über die Lichteinkoppelelemente in den Lichtleiter eingekoppelte und über die Lichtauskoppelemente in Richtung der Lichtaustrittsfläche des Lichtleiters umgelenkte Licht in den Lichtleitbereich mittels Totalreflexion an den Grenzflächen umzulenken. Der Lichtleiter ist dabei so gestaltet, dass über die Lichteinkoppelelemente in den Lichtleiter eingekoppeltes Licht in den Lichtleitbereich stets totalreflektiert wird. Die Gestalt des Lichtleiters ist so gewählt, dass über die Lichteinkoppelelemente in den Lichtleiter eingekoppeltes Licht nicht ohne vorherige Totalreflektion auf die Lichtauskoppelelemente trifft.

Nach einer bevorzugten Ausführungsform der Erfindung erstrecken sich die erste Flachseite ebenso wie die zweite Flachseite des Lichtleiters sowohl in dem Lichtleitbereich als auch in dem Lichtauskoppelbereich. Die Flachseiten sind dabei so gestaltet, dass das Licht in dem Lichtleitbereich beim Auftreffen auf die erste Flachseite beziehungsweise die zweite Flachseite totalreflektiert und in Richtung des Lichtauskoppelbereichs weitergeleitet wird. Vorteilhaft ergibt sich eine besonders einfache und geradlinige Gestalt des Lichtleiters, wenn die einander gegenüberliegenden, beabstandeten Flachseiten sich über den Lichtleitbereich ebenso wie über den Lichtauskoppelbereich erstrecken. Infolge der einfachen geometrischen Gestaltung kann der Lichtleiter kostengünstig hergestellt werden. Insbesondere kann ein Übergang vom Lichtleitbereich in den Lichtauskoppelbereich stetig ausgebildet sein. Insbesondere definieren die im Lichtauskoppelbereich an der ersten Flachseite vorgesehenen Lichtauskoppelelemente die Trennung der zwei Bereiche. Insofern wird in dem Lichtauskoppelbereich auf die erste Flachseite treffendes Licht anders als im Lichtleitbereich nicht totalreflektiert, sondern in Richtung der Lichtaustrittsfläche umgelenkt und über die Lichtaustrittsfläche abgestrahlt.

Nach einer Weiterbildung der Erfindung sind die zwei Flachseiten des Lichtleiters im Lichtleitbereich beziehungsweise im Lichtauskoppelbereich jedenfalls abschnittsweise parallel zueinander orientiert. Die parallele Orientierung der gegenüberliegenden Flachseiten ist hinsichtlich der optischen Auslegung des Lichtleiters vorteilhaft. Insbesondere können die optischen Eigenschaften des Lichtleiters und die durch eine den Lichtleiter aufweisende Straßenleuchte bereitgestellte Lichtverteilung aufgrund der vorteilhaften geometrischen Gestalt des Lichtleiters vergleichsweise genau vorausberechnet werden. Dies ist insbesondere erstrebenswert, wenn eine Mehrzahl von Optikelementen bereitgestellt werden soll, welche sich insbesondere oder ausschließlich durch unterschiedlich gestaltete Lichtleitbereiche differenzieren.

Der Lichtleiter kann als geometrisch einfach gestalteter Körper maßgeblich durch die Größe und Beschaffenheit der beiden zueinander beabstandeten und insbesondere parallel verlaufenden Flachseiten bestimmt werden. Die Flachseiten können plan beziehungsweise gekrümmt ausgebildet sein. Zur Verbindung der gegenüberliegenden Flachseiten sind Schmalseiten vorgesehen. Eine erste Schmalseite des Optikelements ist als Lichteinkoppelseite ausgebildet. An der Lichteinkoppelseite ist wenigstens ein Lichteinkoppelelement vorgesehen. Über das Lichteinkoppelelement wird von der Leuchtdiode abgestrahltes Licht in den Lichtleiter eingekoppelt. In dem Lichtleiter breitet sich das Licht unter Ausnutzung der Totalreflexion an den Begrenzungsflächen (Flachseiten, Schmalseiten) aus. Einen unkontrollierten Austritt des Lichts aus dem Lichtleiter wirkt die Geometrie des Lichtleiters entgegen. Insbesondere kann vorgesehen sein, dass die Lichteinkoppelseite des Lichtleiters - bezogen auf dessen Montageposition in der Straßenleuchte - eine obere Kante des Optikelements definiert.

An einer ersten Flachseite des Lichtleiters sind Lichtauskoppelelemente vorgesehen, welche beispielsweise prismenförmig ausgebildet sein können. Trifft das sich in dem Lichtleiter ausbreitende Licht auf die Lichtauskoppelelemente, wird es in Richtung der als Lichtaustrittsfläche dienenden zweiten Flachseite des Lichtleiters umgelenkt und tritt über die zweite Flachseite aus dem Lichtleiter aus. Die Lichtauskoppelelemente können insbesondere über eine Prismenstruktur gebildet sein. In einem der Lichteinkoppelseite gegenüberliegenden Bereich ist eine weitere Schmalseite des Lichtleiters derart gestaltet, dass Licht, welches nicht auf die an der ersten Flachseite gebildeten Lichtauskoppelelemente trifft, an der weiteren Schmalseite so gebrochen wird, dass es in Richtung der Lichtaustrittsfläche (zweite Flachseite) umgelenkt wird und dort aus dem Lichtleiter austritt. Die Lichtauskoppelelemente sind derart ausgebildet und angeordnet, dass das über die Lichtaustrittsfläche aus dem Lichtleiter austretende Licht die gewünschte Lichtverteilung erzeugt und eine große vertikale Fläche ausgeleuchtet wird. Dabei wird ein Lichtstromanteil von mindestens 50 % in einem Winkelbereich von 60° bis 90°, gemessen zur Vertikalen in einer Montageposition des Optikelements, abgestrahlt.

Nach einer Weiterbildung der Erfindung kann das mindestens eine im Lichteinkoppelbereich vorgesehene Lichteinkoppelelement bezogen auf eine Längsmittelfläche der beabstandeten Flachseiten in Richtung der die Lichtauskoppelelemente aufweisenden ersten Flachseite verschoben angeordnet sein. Das wenigstens eine Lichteinkoppelelement ist insofern nicht mittig zwischen den Flachseiten vorgesehen. Ein Ausgleich für die unsymmetrische Anordnung des wenigstens einen Lichteinkoppelelements bildet insbesondere der Lichteinkoppelbereich, welcher der Umlenkung des eingekoppelten Lichts in Richtung des Lichtauskoppelbereichs dient. Vorteilhaft kann durch die unsymmetrische Gestaltung des Optikelements und die in Bezug zu der Längsmittelfläche verschobene Anordnung des Lichteinkoppelelements eine größere Gestaltungsfreiheit in Bezug auf den Lichtleiter erreicht werden. Das Optikelement kann insofern besser an die individuellen geometrischen Randbedingungen der Straßenleuchte angepasst werden. Darüber hinaus bieten sich Designfreiheitsgrade, wobei die unsymmetrisch angeordneten Lichteinkoppelelemente beispielsweise verdeckt vorgesehen werden können.

Der Lichtleiter kann insbesondere in dem Lichtleit- beziehungsweise Lichtauskoppelbereich die Form einer Lichtleitplatte oder eines Rohrsegments aufweisen. Er bildet beispielsweise einen sogenannten Lichtvorhang. Insbesondere kann vorgesehen sein, Licht über eine Mehrzahl von Leuchtdioden in den Lichtleiter einzukoppeln. Eine Lichteinkoppelfläche des Lichteinkoppelelements wird durch eine Mehrzahl von wenigstens abschnittsweise stetig beziehungsweise konvex gekrümmten Flächenabschnitten gebildet.

Eine das erfindungsgemäße Optikelement aufweisende Straßenleuchte wird durch die Merkmale des Patentanspruchs 10 bestimmt.

Die erfindungsgemäße Straßenleuchte ist hinsichtlich ihrer Optik konstruktiv einfach gestaltet. Durch die einstufige Optik ergeben sich neben dem hohen optischen Wirkungsgrad Kostenvorteile. Dies gilt umso mehr, da eine Mehrzahl von Leuchtdioden auf einer einzigen, zweidimensionalen Leiterplatte montiert werden kann. Die Leiterplatte kann beispielsweise oberhalb des Lichtleiters vorgesehen und im Wesentlichen horizontal erstreckt angeordnet werden. Der Lichtleiter selbst kann aber im Wesentlichen vertikal erstreckt vorgesehen sein. Durch die zweidimensionale Aufbautechnik der Leiterplatte und die einteilige Optik ist eine hervorragende Kosteneffizienz gegeben.

Beispielsweise kann der Lichtleiter zugleich als Abschlussscheibe der Straßenleuchte dienen. Auf eine separate Abschlussscheibe zum Dichten der Leuchte kann insofern verzichtet werden. Insbesondere kann vorgesehen sein, dass der Lichtleiter als einziges Licht formendes Optikelement der Straßenleuchte vorgesehen ist.

Aus den weiteren Unteransprüchen und der nachfolgenden Beschreibung sind weitere Vorteile, Merkmale und Einzelheiten der Erfindung zu entnehmen. Erfindungsgemäß beschriebene Merkmale und Details des Optikelements gelten selbstverständlich auch im Zusammenhang mit der erfindungsgemäßen Leuchte und umgekehrt. So kann auf die Offenbarung zu den einzelnen Erfindungsaspekten stets wechselseitig Bezug genommen werden. Dort erwähnte Merkmale können jeweils einzeln für sich oder auch in beliebiger Kombination erfindungswesentlich sein.

Anhand der beigefügten Zeichnungen wird die Erfindung nachfolgend näher erläutert. Es zeigen:
- Fig. 1: einen Längsschnitt durch ein erfindungsgemäßes Optikelement,
- Fig. 2: eine Detailvergrößerung des Bereichs X in Fig. 1,
- Fig. 3: eine erste Ausführungsvariante des Optikelements nach Fig. 1,
- Fig. 4: eine zweite Ausführungsvariante des Optikelements nach Fig. 1,
- Fig. 5: eine dreidimensionale Darstellung eines erfindungsgemäßen Optikelements mit planen, äquidistant beabstandeten Flachseiten,
- Fig. 6: eine zweite perspektivische Ansicht des Optikelements nach Fig. 5,
- Fig. 7: eine dreidimensionale Darstellung eines rohrsegmentförmigen Optikelements mit gekrümmten Flachseiten,
- Fig. 8: eine zweite perspektivische Ansicht des Optikelements nach Fig. 7,
- Fig. 9: eine mittels des erfindungsgemäßen Optikelements bereitgestellte Lichtverteilung als Polardiagramm und
- Fig. 10: die Lichtverteilung nach Fig. 9 in einer zweiten Darstellungsform.

Dekorstraßenleuchten werden heute vorzugsweise im innerstädtischen Bereich, beispielsweise in Fußgängerzonen, Einkaufsstraßen oder Parks, eingesetzt. Während konventionelle Straßenleuchten, wie sie beispielsweise zur Ausleuchtung von innerstädtischen Straßen vorgesehen sind, eine flache beziehungsweise leicht gewölbte Lichtaustrittsfläche mit im Wesentlichen horizontaler Erstreckung aufweisen, ist die Lichtaustrittsfläche dieser Dekorstraßenleuchten vertikal orientiert. Hierdurch ergibt sich ein optisch ansprechender, vertikal erstreckter Leuchtenkörper, der aus einer seitlichen Blickrichtung eine große leuchtende Fläche aufweist.

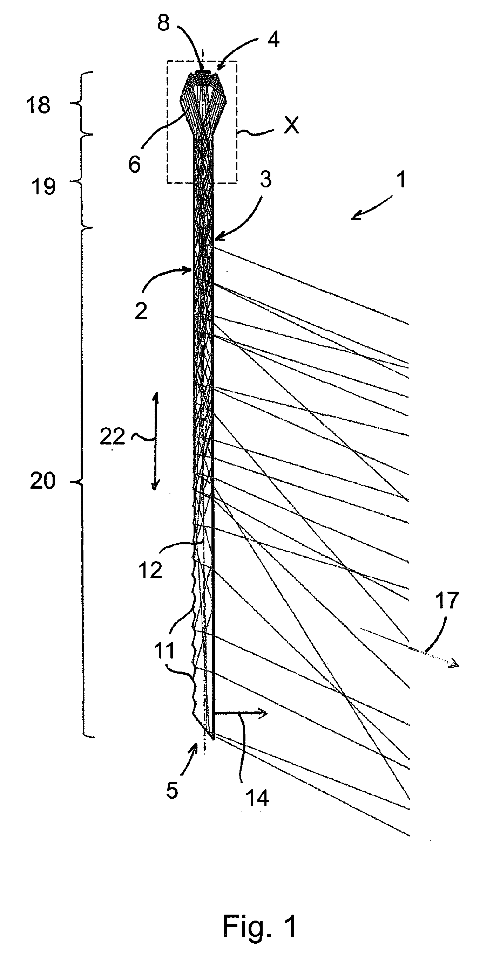

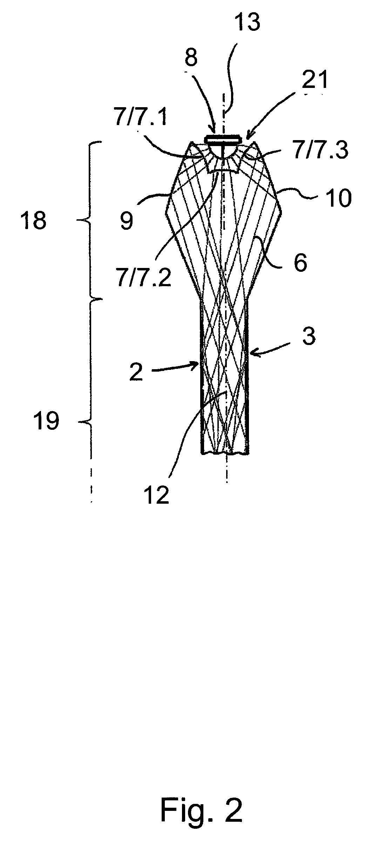

Die Fig. 1 und 2 zeigen einen Längsschnitt durch ein Optikelement, welches zum Einbau in eine Dekorstraßenleuchte vorgesehen ist und bezogen auf eine Längserstreckungsrichtung 22 desselben schlank ausgebildet ist. Dabei bestimmt ein Lichtleiter 1 mit zwei gegenüberliegende, äquidistant beabstandete Flachseiten 2, 3 das Erscheinungsbild des Optikelements. Die Flachseiten 2, 3 sind über Schmalseiten 4, 5 verbunden. Eine erste Schmalseite 4 ist hierbei nach Art einer Lichteinkoppelseite 4 ausgebildet und weist wenigstens ein Lichteinkoppelelement 6 auf.

Das Lichteinkoppelelement 6 weist eine der ersten Schmalseite 4 zugeordnete muldenförmige Ausnehmung 21 mit einer Lichteinkoppelfläche 7 auf, welche im montierten Zustand des Optikelements einer Leuchtdiode 8 der Dekorstraßenleuchte zugewandt ist. Die Lichteinkoppelfläche 7 umfasst drei stetig und konvex gekrümmte Flächenabschnitte 7.1, 7.2., 7.3. Ein der Leuchtdiode 8 gegenüberliegender mittlerer Flächenabschnitt 7.2 dient dazu, ein von der Lichtdiode 8 in einem Winkelbereich von +/-30° +/- 5° - bezogen auf eine optische Achse 13 der Leuchtdiode 8 - von der Lichtdiode 8 abgestrahltes Licht in Lichtleiter 1 einzukoppeln. Das Licht wird dabei derart gebündelt, dass es unter einem sehr flachen Winkel zu einer Längsmittelfläche 12 in den Lichtleiter 1 eingekoppelt wird. In einem äußeren Bereich (größer +/- 30° +/- 5°) abgestrahltes Licht wird über die seitlichen Flächenabschnitte 7.1, 7.3 zunächst auf eine Totalreflexionsfläche 9, 10 gelenkt. Von dort wird das Licht unter einem definierten Winkel in Richtung der Flachseiten 2, 3 umgelenkt. Die optische Achse 13 der Leuchtdiode 8 erstreckt sich hierbei in der Längsmittelebene 12.

An einer ersten Flachseite 2 des Lichtleiters 1 sind prismenförmige Lichtauskoppelelemente 11 vorgesehen. Trifft in dem Lichtleiter 1 eingekoppeltes Licht auf ein Lichtauskoppelelement 11, wird es in Richtung der gegenüberliegenden zweiten Flachseite 3 umgelenkt und über die zweite Flachseite 3 aus dem Lichtleiter 1 ausgekoppelt. Die zweite Flachseite 3 definiert insofern eine Lichtaustrittsfläche 3 des Lichtleiters 1.

In einem der Lichteinkoppelseite 4 gegenüberliegenden Bereich ist eine weitere Schmalseite 5 des Lichtleiters 1 gegenüber der Vertikalen beziehungsweise Längsmittelfläche 12 des Lichtleiters 1 derart angestellt, dass Licht, welches nicht auf ein Lichtauskoppelelement 11 der ersten Flachseite 2 des Lichtleiters 1 trifft, gleichwohl in Richtung der Lichtaustrittsfläche 3 umgelenkt und über die Lichtaustrittsfläche 3 abgestrahlt wird. Speziell im Wesentlichen parallel zu den Flachseiten 2, 3 in den Lichtleiter 1 eingekoppeltes Licht wird so ausgekoppelt. Ein Anstellwinkel liegt hierbei typischerweise im Bereich von 50° +/- 5° zur Horizontalen beziehungsweise Auskoppelflächennormalen 14.

Als Lichtauskoppelelemente 11 sind insbesondere Prismen 11 an der ersten Flachseite 2 vorgesehen. Die Prismenflanken sind dabei gegenüber der Auskoppelflächennormalen 14 derart angestellt, dass ein Winkel, unter dem das Licht auf die zweite Flachseite 3 (Lichtaustrittsfläche) trifft, so klein wird, dass der Grenzwinkel der Totalreflexion unterschritten wird und das Licht den Lichtleiter 1 verlässt. Die Orientierung der Prismenflanken ist hierbei auf die typischen Auftreffwinkel des sich in dem Lichtleiter 1 ausbreitenden Lichts abzustimmen. Der typische Auftreffwinkel wird dabei insbesondere durch die Geometrie der Einkoppelelemente 6 bestimmt. Ein relativer Flächenanteil der Prismenstruktur an der Gesamtfläche der ersten Flachseite 2 steigt dabei mit zunehmenden Abstand von dem Lichteinkoppelelement 6 beziehungsweise der Lichteinkoppelseite 4. So wird in dem einkoppelelementnahen Bereich nur ein kleiner Teil des in dem Lichtleiter 1 befindlichen Lichtstroms ausgekoppelt, während in dem einkoppelelementfernen Bereich des Lichtleiters 1 ein Großteil des Lichtstroms auf die Lichtauskoppelelemente 11 trifft und über die Lichtaustrittsfläche 3 aus dem Lichtleiter 1 ausgekoppelt wird.

Bei der Bestimmung der Geometrie der Prismenflanken ist darauf zu achten, dass in Abhängigkeit vom typischen Auftreffwinkel des Lichts auf die erste Flachseite 2 der Prismenwinkel weder zu groß noch zu klein gewählt wird. Bei zu steilen Prismenflanken kann ansonsten die Totalreflexion versagen und Licht über die erste Flachseite 2 - quasi nach hinten - aus dem Lichtleiter 1 austreten. Bei zu flachen Prismen kann das Licht hingegen unter einem zu kleinen Winkel über die zweite Flachseite 3 ausgekoppelt werden mit der Folge, dass die gewünschte Lichtverteilung nicht erreicht wird.

Der Lichtleiter 1 gliedert sich hierbei funktional und geometrisch in drei Bereiche. Das Lichteinkoppelelement 6 definiert einen Lichteinkoppelbereich 18 des Lichtleiters 1. Die an der ersten Flachseite 2 vorgesehenen Lichtauskoppelelemente 11 definieren einen Lichtauskoppelbereich 20 des Lichtleiters 1. Zwischen dem Lichteinkoppelbereich 18 und dem Lichtauskoppelbereich 20 ist ein Lichtleitbereich 19 vorgesehen, in dem über das Lichteinkoppelelement 6 eingekoppeltes Licht totalreflektiert und in Richtung des Lichtauskoppelbereichs 20 weitergeleitet wird. Die Geometrie des Lichtleiters 1 ist dabei so gewählt, dass in den Lichtleiter 1 eingekoppeltes Licht nicht ohne Totalreflexion auf die Lichtauskoppelelemente 11 des Lichtleiters 1 trifft. Der Lichtleitbereich 19 definiert insofern einen Licht leitenden Hals beziehungsweise Ausgleichsbereich des Lichtleiters 1.

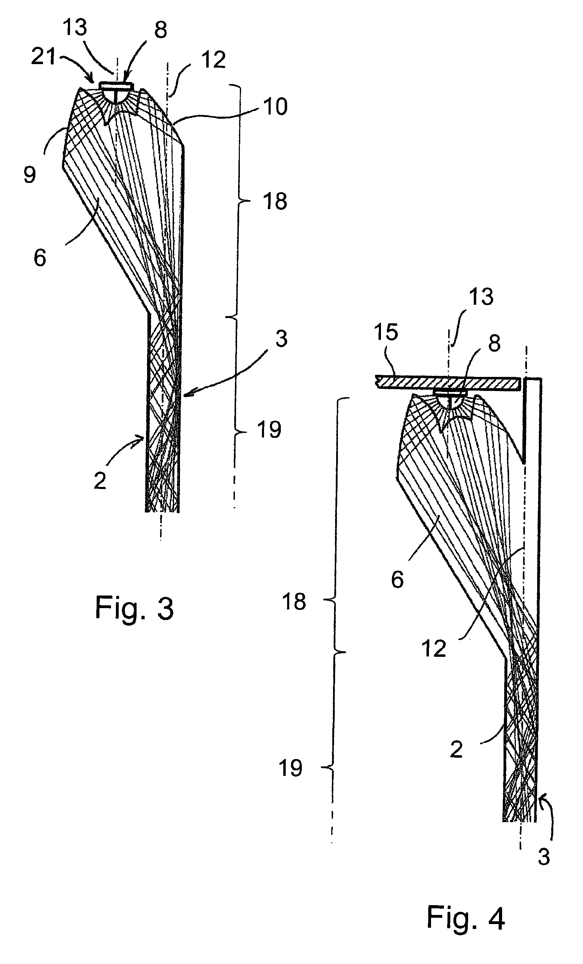

Fig. 3 beschreibt eine Ausführungsvariante des Optikelements. Hierbei ist die Lichteinkoppeloptik 6 - bezogen auf die Längsmittelfläche 12 desselben - in Richtung der ersten Flachseite 2 verschoben. Die Leuchtdiode 8 ist insofern nicht zentrisch über dem Lichtleiter 1 positioniert, das heißt die optische Achse 13 der Leuchtdiode 8 ist in Richtung der ersten Flachseite 12 parallelverschoben zur Längsmittelfläche 13 vorgesehen. Dies ist insbesondere dann vorteilhaft, wenn die Lichtaustrittsfläche 3 des Lichtleiters 1 einen äußeren Rand der Straßenleuchte bildet und keine Elemente über die zweite Flachseite 3 hinausragen sollen. Beispielsweise können Designerwägungen die hinsichtlich der Längsmittelfläche 12 unsymmetrische Ausgestaltung des Lichteinkoppelbereichs 18 und die Verschiebung des Lichteinkoppelelements 6 erfordern. Der an dem Lichteinkoppelbereich 18 anschließende Lichtleitbereich 19 definiert dabei als Ausgleichsbereich den Übergang zu dem Lichtauskoppelbereich 20.

Darüber hinaus kann vorgesehen sein, dass ein das erfindungsgemäße Optikelement aufweisendes Optikmodul vorgesehen wird, welches im Austausch konventioneller Leuchtmittel und Optiken in bestehende Straßenleuchtengehäuse eingebaut wird. Hier gibt die Geometrie der bestehenden Leuchtengehäuse die Außenabmessung des Lichtmoduls verbindlich vor. Der zur Verfügung stehende Bauraum kann dabei so gering bemessen sein, dass ein Herausragen des Einkoppelelements 6 über die äußere Flachseite 3 vermieden werden muss.

Fig. 4 zeigt eine weitere Ausführungsvariante des Optikelements. Die Lichtaustrittsfläche 3 erstreckt sich in den Bereich einer im Wesentlichen horizontal erstreckten und die Leuchtdiode 8 tragenden Leiterplatte 15 und überdeckt diese an einer Außenseite. Der Lichtleiter 1 kann hierdurch den mechanischen Anschluss an die Straßenleuchte darstellen. Eine separate Abschlussscheibe zum Dichten der Straßenleuchte ist insofern entbehrlich.

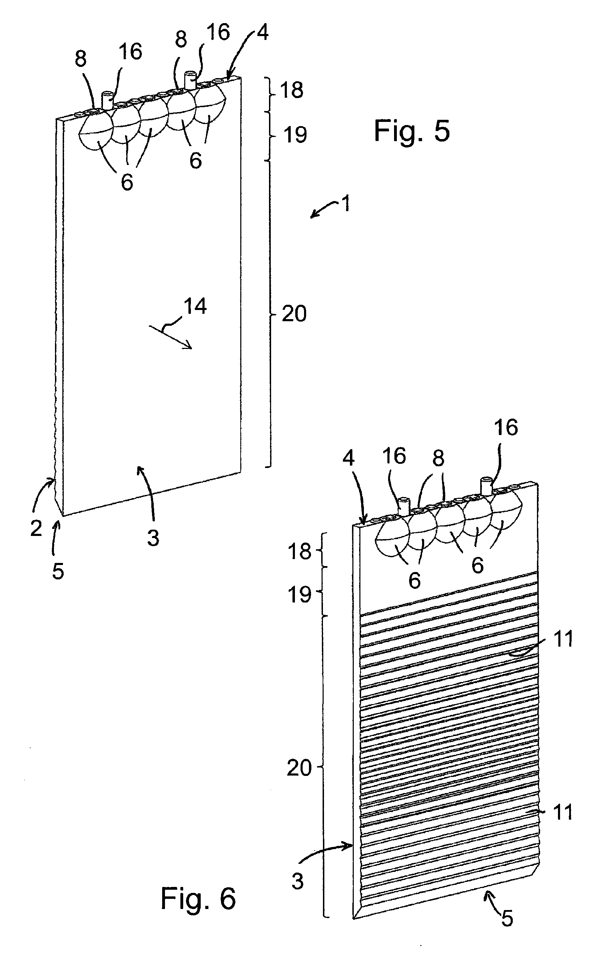

Ein Optikelement nach den Fig. 5 und 6 weist eine im Wesentlichen plattenförmige Geometrie mit planen Flachseiten 2, 3 und fünf entlang der Lichteinkoppelseite 4 beabstandet zueinander angeordneten Lichteinkoppelelementen 6 auf. Jedem Lichteinkoppelelement 6 ist hierbei eine nicht dargestellte, separate Leuchtdiode 8 zugeordnet. Die auf der ersten Flachseite 2 ausgebildete Prismenstruktur ist in ihrer Geometrie so ausgebildet, dass mit zunehmenden Abstand von der Lichteinkoppelseite 4 ein größerer Anteil des noch in dem Lichtleiter 1 verbleibenden Lichts auf die Lichtauskoppelelemente 11 trifft und zur Auskopplung in Richtung der zweiten Flachseite 3 umgelenkt wird. Wie gehabt wird auf die der Lichteinkoppelseite 4 gegenüberliegenden weiteren Schmalseite 5 treffendes Licht ebenfalls in Richtung der Lichtaustrittsfläche 3 umgelenkt und aus dem Lichtleiter 1 ausgekoppelt.

Die Lichteinkoppelelemente 6 sind hierbei in Form ellipsenförmiger Linsen realisiert. Im Bereich der Lichteinkoppelseite 4 sind überdies Anbindungsabschnitte 16 zum Festlegen der nicht dargestellten Leiterplatte 15 oder zum Befestigen des Optikelements in dem Gehäuse der Straßenleuchte vorgesehen.

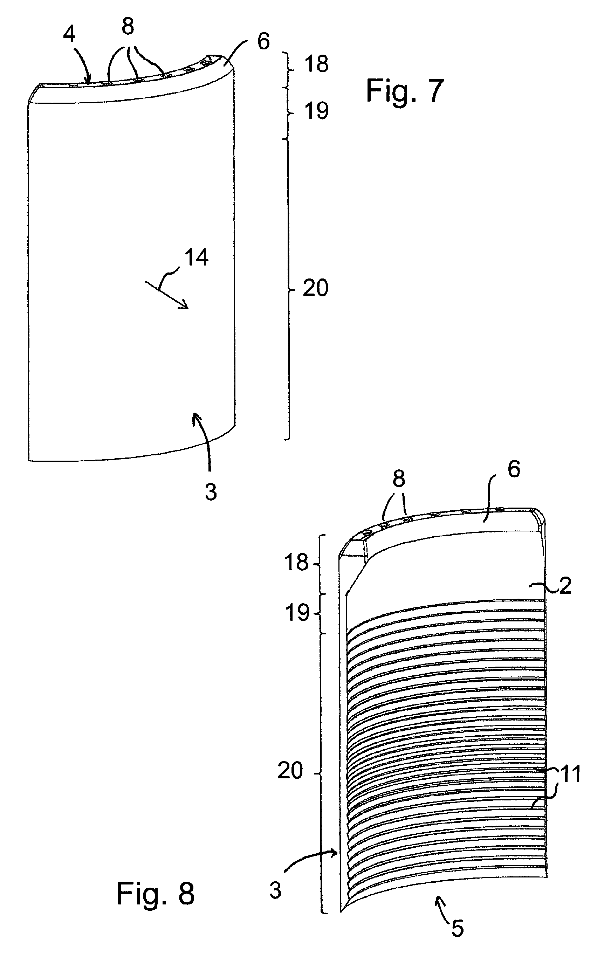

Wie in den Fig. 7 und 8 dargestellt, kann der Lichtleiter 1 ebenso als Zylindersegment beziehungsweise Rohrsegment ausgebildet werden. Die Einkopplung des Lichts in den Lichtleiter 1 erfolgt über ein einziges, langgestrecktes Lichteinkoppelelement 6, welches profilförmig ausgebildet ist. Beispielsweise ist das Einkoppelprofil 6 extruiert beziehungsweise rotiert. Im vorliegenden Ausführungsbeispiel der Erfindung sind dem Einkoppelprofil 6 sechs Leuchtdioden 8 zugeordnet, und es sich entsprechend sechs Lichteinkoppelflächen 7 an dem Einkoppelprofil 6 vorgesehen. Das Einkoppelelement 6 ist analog zur Darstellung nach der Fig. 3 in Richtung der die Lichtauskoppelelemente 11 aufweisenden ersten Flachseite 2 verschoben. Die zweite Flachseite 3 (Lichtaustrittsfläche 3) definiert insofern eine äußere Grenzfläche des Optikelements.

Die Optikelemente nach den Fig. 5 bis 8 weisen die erfindungswesentliche Unterteilung in den die Lichteinkoppelelemente 6 aufweisenden Lichteinkoppelbereich 18, den Lichtauskoppelbereich 20 mit den Lichtauskoppelelementen 11 und den Lichtleitbereich 19 auf, welcher zwischen dem Lichteinkoppelbereich 18 und dem Lichtauskoppelbereich 20 vorgesehen ist. Jeweils erstrecken sich die Flachseiten 2, 3 in den Lichtleitbereich 19 und den Lichtauskoppelbereich 20. Der Beginn der Lichtauskoppelelemente 11 an der ersten Flachseite 2 definiert dabei den Übergang vom Lichtleitbereich 19 zum Lichtauskoppelbereich 20.

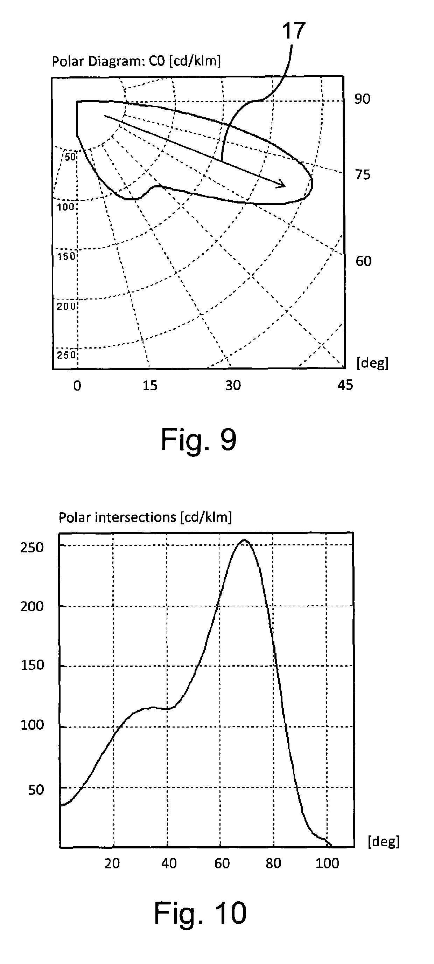

Eine mithilfe des Optikelements realisierte Lichtverteilung ist in den Fig. 9 und 10 dargestellt. Hierbei wird deutlich, dass Licht hauptsächlich in dem Winkelbereich von 60° bis 90° - bezogen auf die Vertikale beziehungsweise die Lichtaustrittsflächennormale 14 - abgestrahlt wird. Insofern versteht sich eine Hauptabstrahlrichtung 17 des Optikelements als die Richtung, in die die normierte Lichtstärke (gemessen in cd/klm) am größten ist.

Gleiche Bauteile und Bauteilfunktionen sind durch gleiche Bezugszeichen gekennzeichnet.

### Bezugszeichenliste

- 1: Lichtleiter
- 2: erste Flachseite
- 3: zweite Flachseite
- 4: Lichteinkoppelseite
- 5: weitere Schmalseite
- 6: Lichteinkoppelelement
- 7: Lichteinkoppelfläche
- 7.1: Flächenabschnitt
- 7.2: Flächenabschnitt
- 7.3: Flächenabschnitt
- 8: Leuchtdiode
- 9: Totalreflexionsfläche
- 10: Totalreflexionsfläche
- 11: Lichtauskoppelelement
- 12: Längsmittelfläche
- 13: optische Achse
- 14: Lichtauskoppelflächennormale
- 15: Leiterplatte
- 16: Anbindungsabschnitt
- 17: Hauptabstrahlrichtung
- 18: Lichteinkoppelbereich
- 19: Lichtleitbereich
- 20: Lichtauskoppelbereich
- 21: Ausnehmung
- 22: Längserstreckungsrichtung

## Patentansprüche

1. Optikelement, insbesondere für eine Straßenleuchte mit mindestens einer Leuchtdiode (8) als Lichtquelle, umfassend einen jedenfalls abschnittsweise im Wesentlichen flächig erstreckten Lichtleiter (1) mit einer ersten Flachseite (2) und mit einer der ersten Flachseite (2) gegenüberliegenden und zu der ersten Flachseite (2) beabstandeten zweiten Flachseite (3) und mit mindestens einer die beabstandeten Flachseiten (2, 3) verbindenden Schmalseite (4, 5), wobei ein erster Bereich des Lichtleiters (1) als ein Lichteinkoppelbereich (18) ausgebildet ist mit wenigstens einem Lichteinkoppelelement (6) zum Einkoppeln von Licht in den Lichtleiter (1), wobei ein zweiter Bereich des Lichtleiters (1) als ein Lichtauskoppelbereich (20) ausgebildet ist derart, dass die erste Flachseite (2) Lichtauskoppelemente (11) vorsieht zum Umlenken des über das wenigstens eine Lichteinkoppelelement (6) in den Lichtleiter (1) eingekoppelten Lichts in Richtung der als Lichtaustrittsfläche (3) dienenden zweiten Flachseite (3) des Lichtleiters (1), und wobei zwischen dem Lichteinkoppelbereich (18) und dem Lichtauskoppelbereich (20) ein Lichtleitbereich (19) vorgesehen ist, welcher derart ausgebildet ist, dass das in den Lichtleiter (1) eingekoppelte Licht vor dem Austritt aus dem Lichtleiter (1) totalreflektiert wird.

2. Optikelement nach Anspruch 1, **dadurch gekennzeichnet, dass** sich die erste Flachseite (2) und die zweite Flachseite (3) in dem Lichtleitbereich (19) des Lichtleiters (1) und in dem Lichtauskoppelbereich (20) des Lichtleiters (1) erstrecken, wobei die erste Flachseite (2) und die zweite Flachseite (3) jedenfalls in dem Lichtleitbereich (19) des Lichtleiters (1) derart ausgebildet sind, dass das Licht beim Auftreffen auf die erste Flachseite (2) und/oder die zweite Flachseite (3) totalreflektiert wird.

3. Optikelement nach Anspruch 1 oder 2, **dadurch gekennzeichnet, dass** die erste Flachseite (2) und die zweite Flachseite (3) in dem Lichtleitbereich (19) des Lichtleiters (1) und/oder in dem Lichtauskoppelbereich (20) des Lichtleiters (1) parallel zueinander orientiert sind.

4. Optikelement nach einem der Ansprüche 1 bis 3, **dadurch gekennzeichnet, dass** in dem Lichteinkoppelbereich (18) eine erste Schmalseite (4) zum Verbinden der zwei Flachseiten (2, 3) vorgesehen ist, wobei die erste Schmalseite (4) als eine Lichteinkoppelseite (4) ausgebildet ist und das wenigstens eine Lichteinkoppelelement (6) aufweist.

5. Optikelement nach einem der Ansprüche 1 bis 4, **dadurch gekennzeichnet, dass** an dem Lichteinkoppelelement (6) eine Lichteinkoppelfläche (7) vorgesehen ist, welche aus einer Mehrzahl von abschnittsweise stetig und/oder konvex gekrümmten Flächenabschnitten (7.1, 7.2, 7.3) gebildet ist, und/oder dass an dem Lichteinkoppelelement (6) eine die Lichteinkoppelfläche (7) formende muldenförmige Ausnehmung (21) vorgesehen ist.

6. Optikelement nach einem der Ansprüche 1 bis 5, **dadurch gekennzeichnet, dass** die Lichtauskoppelelemente (11) derart ausgebildet, angeordnet und/oder beabstandet sind, dass mindestens 50 % des über die als Lichtaustrittsfläche dienende zweite Flachseite (3) abgestrahlten Lichts in einem Winkelbereich von 60° bis 90° - bezogen auf die Vertikale in einem Montagezustand des Lichtleiters (1) - abgestrahlt wird.

7. Optikelement nach einem der Ansprüche 1 bis 6, **dadurch gekennzeichnet, dass** eine weitere Schmalseite (5) des Lichtleiters (1) in einem der Lichteinkoppelseite (4) gegenüberliegenden Bereich derart gegenüber der Vertikalen in dem Montagezustand des Lichtleiters (1) angestellt ausgebildet ist, dass in den Lichtleiter (1) eingekoppeltes und auf den angestellten Bereich der weiteren Schmalseite (5) auftreffendes Licht in Richtung der zweiten Flachseite (3) umgelenkt wird und über die zweite Flachseite (3) aus dem Lichtleiter (1) austritt.

8. Optikelement nach einem der Ansprüche 1 bis 7, **dadurch gekennzeichnet, dass** das mindestens eine an der Lichteinkoppelseite (4) vorgesehene Lichteinkoppelelement (6) bezogen auf eine Längsmittelfläche (12) der vorzugsweise äquidistant beabstandeten Flachseiten (2, 3) in Richtung der die Lichtauskoppelelemente (11) aufweisenden ersten Flachseite (2) verschoben angeordnet ist.

9. Optikelement nach einem der Ansprüche 1 bis 8, **dadurch gekennzeichnet, dass** ein Flächenanteil der Lichtauskoppelelemente (11) an einer Gesamtfläche der ersten Flachseite (2) mit zunehmenden Abstand von dem mindestens einen Lichteinkoppelelement (6) und/oder von der Lichteinkoppelseite (4) steigt.

10. Straßenleuchte mit einer Mehrzahl von Leuchtdioden (8) als Lichtquelle und mindestens einem Optikelement, welches von der Leuchtdiode (8) abgestrahltes Licht in eine Lichtabstrahlrichtung umlenkt, **dadurch gekennzeichnet, dass** als Optikelement ein Optikelement nach einem der Ansprüche 1 bis 9 vorgesehen ist, wobei die Lichteinkoppelfläche (7) des Optikelements der Leuchtdiode (8) zugewandt vorgesehen ist und/oder zur Aufnahme der Leuchtdiode (8) an dem Lichteinkoppelelement (6) eine die Lichteinkoppelfläche (7) aufweisende muldenförmige Ausnehmung (21) gebildet ist.

11. Straßenleuchte nach Anspruch 10, **dadurch gekennzeichnet, dass** die Flachseiten (2, 3) des in einem Gehäuse der Straßenleuchte montierten Lichtleiters (1) im Wesentlichen vertikal erstreckt vorgesehen sind und/oder gegenüber der Vertikalen derart geneigt angeordnet sind, dass bezogen auf eine Längserstreckungsrichtung (22) des Lichtleiters (1) eine Vertikalerstreckung der Flachseiten (2, 3) größer ist als eine Horizontalerstreckung derselben.

12. Straßenleuchte nach Anspruch 10 oder 11, **dadurch gekennzeichnet, dass** der Lichtleiter als einziges eine Lichtverteilung formendes Optikelement vorgesehen ist und/oder dass die Lichtaustrittsfläche (3) zugleich eine Abschlussscheibe der Straßenleuchte bildet.

13. Straßenleuchte nach einem der Ansprüche 10 bis 12, **dadurch gekennzeichnet, dass** die Mehrzahl von Leuchtdioden (8) an mindestens einer vorzugsweise horizontal erstreckten Leiterplatte (15) festgelegt sind und/oder dass die Leiterplatte (15) im montierten Zustand oberhalb des Lichtleiters (1) und/oder des Lichteinkoppelelements (6) vorgesehen ist.
